# EUROPEAN PATENT APPLICATION

(11) **EP 4 757 215 A1**
(43) Date of publication of application: **10.06.2026**
(21) Application number: 24848894.2
(22) Date of filing: 16.07.2024
(51) Int. Cl.: H04L 1/00, G06K 7/10

(54) **COMMUNICATION DEVICE**

(30) Priority: 01.08.2023 JP 2023125748
(71) Applicant: OMRON Corporation, Kyoto-shi, Kyoto 600-8530 (JP)
(72) Inventor: YOSHIDA, Tatsuo, Kyoto-shi, Kyoto 600-8530 (JP); MIWA, Yusuke, Kyoto-shi, Kyoto 600-8530 (JP)
(74) Representative: Becker, Eberhard
(86) International application number: PCT/JP2024/025444
(87) International publication number: WO 2025/028238

(57) **Abstract**

This invention realizes a communication device capable of outputting notification information in some cases, even if a reception error occurs in communication with a slave unit. A communication device (10) comprises: a determination unit (70) that determines whether there is a reception error in frame data demodulated by a reception unit (40); and a control unit (60). If a determination result is obtained indicating that there is a reception error, the control unit (60) uses demodulated first additional information to examine whether there is an error in demodulated notification information, and outputs the demodulated notification information if an examination result is obtained indicating that there is no error.

## Description

### Technical Field

The disclosure relates to a communication device.

### Related Art

In recent years, in contactless tags such as RFID (Radio Frequency Identification) tags, it is known that when communicating with a reader writer as a communication device as a slave device, power is received wirelessly from the reader writer to generate power for operation. Then, the tag is configured to transmit a signal including notification information, which is information to be notified, to the reader writer (master unit) using the generated power.

### Citation List

### Patent Literature

Patent Literature 1: Japanese Patent Application Laid-Open Publication No. 2001-307052

### SUMMARY OF INVENTION

### Technical Problem

However, in the case of a conventional communication device, when a reception error occurs in communication with a slave device, the device does not output notification information to the upper-level machine, but simply notifies the upper-level machine of the error.

The disclosure has been made in view of the above problem, and an object thereof is to realize a communication device capable of outputting notification information depending on circumstances even when a reception error occurs in communication with a slave device. Solution to Problem

The disclosure adopts the following configuration to solve the above-described problem.

A communication device according to one aspect of the disclosure includes a reception portion, configured to receive a signal transmitted by a slave device in frame unit and demodulate data included in the signal; a determination portion, configured to perform determination of whether there is a reception error in the data of the frame that has been demodulated; and a control portion, in which the frame includes at least notification information, first additional information following the notification information, and second additional information following the first additional information, and the control portion, in response to obtaining a result of the determination that the reception error has occurred, performs, using the first additional information that has been demodulated, inspection of whether an error has occurred in the notification information that has been demodulated, and in response to a result of the inspection indicating that no error is present, outputs the notification information that has been demodulated.

According to the above configuration, a communication device capable of outputting notification information depending on circumstances even when a reception error occurs in communication with a slave device may be realized.

The control portion, in response to a result of the determination that the reception error has occurred, may output information indicating a result of the inspection.

According to the above configuration, a upper-level machine or the like of the communication device may acquire information relating to reliability of the notification information output by the communication device. Alternatively, the upper-level machine or the like may obtain information relating to a state of communication between the communication device and the slave device by using the information.

The communication device may further include a display portion, and the control portion, in response to obtaining a result of the determination that the reception error has occurred and obtaining a result of the inspection that no error has occurred in the notification information that has been demodulated, may cause the display portion to perform a predetermined display.

According to the above configuration, a user of the communication device may immediately recognize whether a reception error has occurred even in a situation where the communication device is capable of outputting notification information.

The determination portion may perform the determination by error detection using a second check character included in the second additional information that has been demodulated.

According to the above configuration, the communication device may perform determination of whether there is a reception error for a frame.

The control portion may perform the inspection by error detection using a first check character included in the first additional information that has been demodulated.

According to the above configuration, the communication device may perform inspection of whether there is an error in the demodulated notification information.

The communication device may further include a communication portion, and the control portion may control the communication portion to transmit the notification information to be output to an external machine.

According to the above configuration, the external machine may acquire the notification information.

The communication device may further include a transmission portion configured to wirelessly transmit a command to a slave device, and the signal may be a wireless response from the slave device to the command.

According to the above configuration, in a communication system including a slave device that responds to a command from the communication device, a communication device may be realized that may output notification information depending on circumstances even when a reception error occurs in communication with the slave device.

The communication device may be an RFID reader.

According to the above configuration, an RFID reader may be realized that may output notification information depending on circumstances even when a reception error occurs in communication with an RFID tag.

### Effects of Invention

According to the disclosure, a communication device may be realized that may output notification information depending on circumstances even when a reception error occurs in communication with a slave device.

### BRIEF DESCRIPTION OF THE DRAWINGS

[FIG. 1] is a diagram showing an overview of a communication system to which a communication device according to one embodiment of the disclosure is applied.
[FIG. 2] is a diagram showing a data format of a response from a tag.
[FIG. 3] is a flowchart showing an operation example of the communication device.
[FIG. 4] is a diagram showing an operation example of data communication between the communication device and a tag, and is a diagram describing an effect of the communication device.

### DESCRIPTION OF THE EMBODIMENTS

Hereinafter, an embodiment according to one aspect of the disclosure (hereinafter, also referred to as "the present embodiment") will be described based on the drawings.

### §1 Application Example

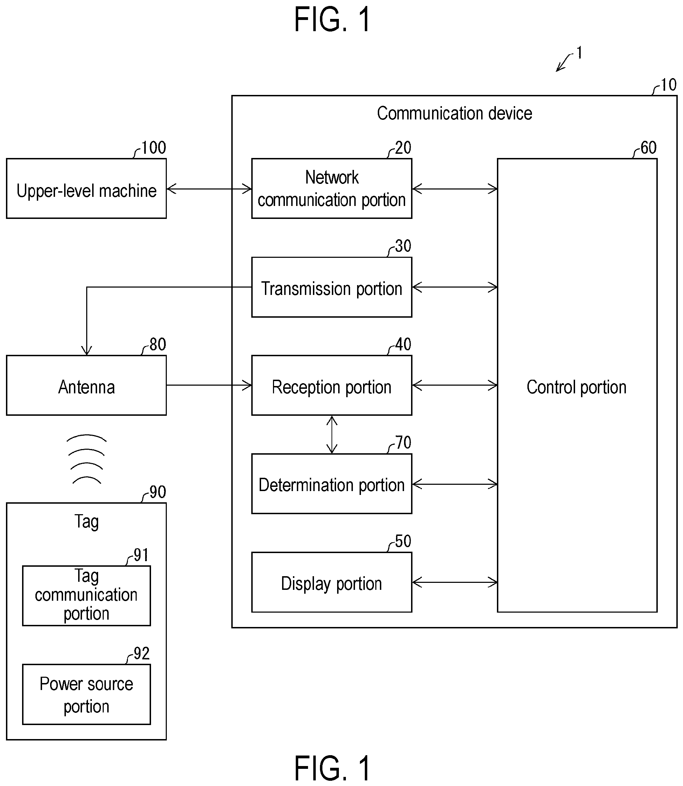

A communication device 10 described with reference to FIG. 1 is an example of a communication device according to an application example of the disclosure. The communication device 10 includes a reception portion 40, a control portion 60, and a determination portion 70. The reception portion 40 receives a signal from a tag 90 serving as a slave device and demodulates the received signal into data in a frame unit.

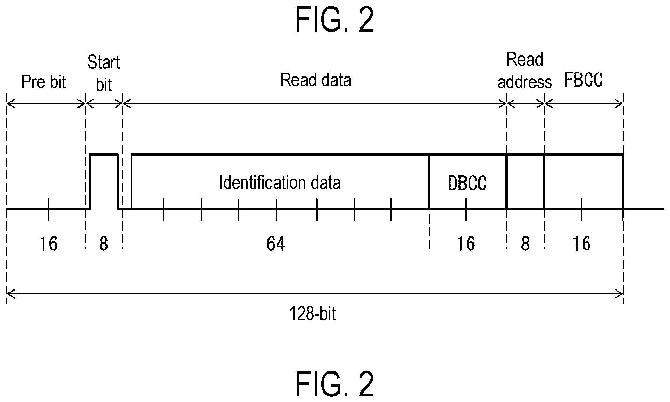

The determination portion 70 performs determination of whether there is a reception error in the frame data demodulated by the reception portion 40. The demodulated frame has, for example, a data format shown in FIG. 2 (details will be described later).

The control portion 60 performs inspection of whether there is an error in notification information described later included in the frame, using first additional information described later included in the frame. The control portion 60 outputs the notification information in a case where a result that there is no error in the notification information is obtained.

Thus, according to the present embodiment, in the communication device 10, the control portion 60 performs inspection of whether there is an error in the notification information included in the frame, using the first additional information included in the frame, for a frame for which determination that there is a reception error has been made. The control portion 60 outputs the notification information in a case where a result of inspection that there is no error in the notification information is obtained. Accordingly, a communication device capable of outputting notification information depending on circumstances even when a reception error occurs in communication with the tag (slave device) 90 may be realized.

### §2 Configuration Example

### [One Embodiment]

### <Overview of Communication System>

Hereinafter, embodiments of the disclosure will be described in detail. FIG. 1 is a diagram showing an overview of a communication system 1 to which a communication device 10 according to one embodiment of the disclosure is applied.

The communication system 1 is a passive type RFID system utilizing electromagnetic waves in an LF (Low Frequency) band. The communication system 1 includes a communication device 10 and a upper-level machine 100 of the communication device 10 connected to the communication device 10 by an appropriate communication network. The upper-level machine 100 is an external machine such as, for example, a PLC (Programmable Logic Controller) or a PC (Personal Computer). In addition, the communication system 1 includes a tag 90. An antenna 80 is connected to the communication device 10, and wireless communication may be performed between the communication device 10 and the tag 90.

The tag 90 is a known passive type wireless device, also referred to as a wireless tag, an RFID tag, a transponder, or the like. The communication device 10 is a wireless communication device corresponding to a master unit of the tag 90, also referred to as an RFID reader, a tag reader, a reader/writer, or the like. In response to the communication device 10 transmitting a command by wireless communication utilizing electromagnetic waves in the LF band, the tag 90 accumulates energy transmitted by the electromagnetic waves as electrical energy and receives the command.

### <Tag>

The tag 90 includes a tag communication portion 91 and a power source portion 92. The tag communication portion 91 is configured using, for example, an IC (Integrated Circuit) chip, and is configured to also function as a controller that controls each portion of the tag 90. Further, the tag communication portion 91 has a function as a memory that stores data of information acquired by the tag 90. The power source portion 92 includes, for example, a rectifier circuit. In the power source portion 92, the rectifier circuit generates power for operation (accumulated power) of the tag 90 by rectifying electromagnetic waves carrying a command from the communication device 10.

Thereafter, in the power source portion 92, when the accumulated power reaches operable power of the tag 90, the tag 90 starts up. Then, in the tag 90, the tag communication portion 91 reads notification information corresponding to the command from the communication device 10 from the memory. Furthermore, the tag communication portion 91 generates an FM (Frequency Modulation) signal corresponding to data in frame units including the read notification information and makes a reply toward the antenna 80.

As described above, the tag 90 utilizes the accumulated power to transmit (reply) a response to the command from the communication device 10 to the communication device 10.

### <Communication Device>

The communication device 10 includes a network communication portion 20, a transmission portion 30, a reception portion 40, a display portion 50, a control portion 60, and a determination portion 70. The network communication portion 20 is a communication interface as a communication portion for the communication device 10 to communicate with the upper-level machine 100 via an appropriate communication network. In other words, the network communication portion 20 is a function block that transmits notification information to the upper-level machine 100 under control of the control portion 60.

The transmission portion 30 is a function block that transmits a command to the tag 90 via the antenna 80 using electromagnetic waves in the LF band as a carrier wave. The reception portion 40 is a function block that acquires information transmitted by the tag 90 to the communication device 10 from a signal from the tag 90 received via the antenna 80. In other words, the reception portion 40 is a function block that receives a signal transmitted by the tag 90 in frame units and demodulates frame data included in the received signal.

The display portion 50 includes a flat display panel (not shown) and the like, and is a display device that appropriately performs information display under control of the control portion 60. The determination portion 70 is a function block that performs determination of whether there is a reception error in the frame data demodulated by the reception portion 40. The control portion 60 is an information processing device that controls the network communication portion 20, the transmission portion 30, the reception portion 40, the display portion 50, and the determination portion 70 to realize functions of the communication device 10.

### <Response Signal of Tag>

Next, a signal format and the like related to a response from the tag 90 (transponder) will be specifically described with reference to FIG. 2 as well. FIG. 2 is a diagram showing a data format of the response of the tag 90. This data format is a data format of a transponder manufactured by TI (Texas Instruments) (for example, model: RI-TRP-DR2B) conforming to ISO (International Organization for Standardization) 11784 and ISO 11785, and as will be described in detail later, includes at least notification information, first additional information following the notification information, and second additional information following the first additional information. It is noted that for the response from the tag 90, in addition to the FM signal of the frequency modulation method described above, a signal of a digital modulation method such as an FSK (Frequency Shift Keying) modulation method, an ASK (Amplitude Shift Keying) modulation method, or a PSK (Phase Shift Keying) modulation method may be used.

A communication frame of the response by the tag 90 consists of 128-bit fixed-length data, and includes 16-bit pre bits as a preamble and 8-bit start bits following the pre bits. The pre bits have a fixed value of 0b0000000000000000, and the start bits have a fixed value of 0b01111110. Here, "0b" is a symbol indicating that the following sequence is a binary number.

Further, the response includes read data consisting of 64-bit identification data following the start bits and a 16-bit data block check character (DBCC). Further, the response includes an 8-bit read address following the read data and a 16-bit frame block check character (FBCC) following the read address.

Further, in the response, among the read data, the identification data is notification information as a substantial response corresponding to a command from the communication device 10. Further, among the read data, the data block check character is a first check character included in first additional information following the notification information. This data block check character is a code for error detection generated for each identification data. Further, the data block check character is generated according to content of the identification data when the tag communication portion 91 creates the identification data, and is held in the tag communication portion 91.

Further, the read address is a storage position (memory address) of the identification data as the notification information in the memory of the tag 90. Further, the frame block check character is a second check character included in the second additional information following the first additional information. This frame block check character is a code for error detection generated for each frame. In addition, the frame block check character is generated by the tag communication portion 91 in the tag 90 according to data content of the frame when the frame is created.

It is noted that examples of the code for error detection include a parity code, a checksum, a cyclic redundancy code (CRC), and the like.

### §3 Operation Example

### <Operation Example of Communication Device>

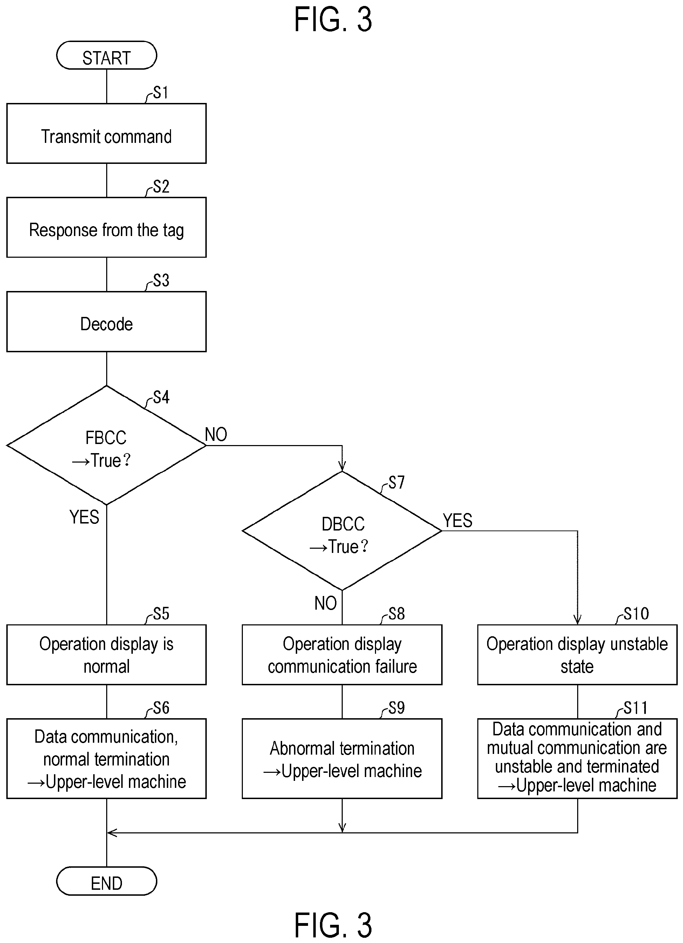

Next, with reference also to FIG. 3, an operation example of the communication device 10 of the present embodiment will be specifically described. FIG. 3 is a flowchart showing an operation example of the communication device 10. It is noted that in the following description, an operation after the communication device 10 receives a read request for notification information stored in the tag 90 from the upper-level machine 100 via the network communication portion 20 will be mainly described.

In step S1 of FIG. 3, the control portion 60 creates a command corresponding to the received read request and transmits the command to the tag 90 from the transmission portion 30 via the antenna 80. In other words, in the communication device 10, the read request specifying desired information (desired data) among information held in the memory of the tag 90 by an address of the memory is transmitted from the upper-level machine 100. Then, the control portion 60 transmits a command corresponding to the read request transmitted sequentially via the transmission portion 30 and the antenna 80 to the tag 90.

Next, in step S2, the reception portion 40 receives a response from the tag 90 via the antenna 80. Specifically, the reception portion 40 receives a signal transmitted by the tag 90 in frame unit. Furthermore, the reception portion 40 decodes data included in the received signal (step S3). Specifically, the reception portion 40 demodulates a signal in frame unit from the tag 90 as frame data. Then, the reception portion 40 outputs the demodulated frame data to the determination portion 70.

Subsequently, in step S4, the determination portion 70 determines whether there is a reception error in the demodulated frame data from the reception portion 40. Specifically, the determination portion 70 performs the determination by error detection using a frame block check character included in the second additional information of the demodulated frame. For example, in the case of using the cyclic redundancy code as an error detection code, the determination portion 70 divides data obtained by removing the second additional information from the frame by a predetermined generator polynomial, compares the remainder with the frame block check character, and determines that there is an error in the case of not matching. Thereby, a determination is made as to whether the frame is able to be received and demodulated without error.

Then, in the case of the determination portion 70 determining that the frame is able to be demodulated without error using the frame block check character (YES in step S4), the determination portion 70 notifies the control portion 60 of a result of the determination that there is no reception error in the frame data from the tag 90. Then, the control portion 60 proceeds to step S5. Thereafter, the control portion 60 causes the display portion 50 to display information indicating that there is no reception error in data communication with the tag 90 and that normal data communication is performed with the tag 90 (step S5).

Next, in step S6, the control portion 60 transmits notification information from the tag 90 to the upper-level machine 100 via the network communication portion 20. Thereby, the upper-level machine 100 may acquire the notification information.

In addition to the above description, before transmitting the notification information to the upper-level machine 100, error detection using a data block check character may be performed as described later to determine whether the notification information is able to be demodulated without error.

On the other hand, in the case of the determination portion 70 determining that the frame is not able to be demodulated without error using the frame block check character (NO in step S4), the determination portion 70 notifies the control portion 60 of a result of the determination that there is a reception error in the frame data from the tag 90. Then, the control portion 60 proceeds to step S7. Thereafter, the control portion 60 performs an inspection as to whether there is an error in the demodulated notification information (step S7).

Specifically, the control portion 60 performs the inspection by error detection using a data block check character included in the first additional information of the demodulated frame. Specifically, the control portion 60 determines whether the identification data (notification information) is able to be received without error and demodulated into the identification data of the notification information, for example, by determining using the cyclic redundancy check.

Then, in the case of the control portion 60 determining that the data (identification data) of the notification information is not able to be demodulated (NO in step S7), the control portion 60 determines that the data of the notification information includes a defect such as data loss.

In other words, the control portion 60 determines that the notification information corresponding to the command from the upper-level machine 100 is not able to be acquired from the tag 90. Then, the control portion 60 causes the display portion 50 to display information indicating that a communication failure has occurred in data communication with the tag 90 (step S8).

Subsequently, in step S9, the control portion 60 outputs information indicating a result of the inspection to the upper-level machine 100 via the network communication portion 20. In other words, the control portion 60 notifies the upper-level machine 100 that the data communication with the tag 90 has terminated abnormally and that the notification information corresponding to the command is not able to be obtained from the tag 90.

On the other hand, in the case of the control portion 60 determining that the data of the notification information is able to be demodulated (YES in step S7), the control portion 60 determines that a result of the inspection indicating that there is no error in the data of the notification information included in the demodulated frame from the tag 90 has been obtained. More specifically, the control portion 60 determines that there is a reception error in the frame data from the tag 90, and that the identification data included in the read data of the frame, that is, the data of the demodulated notification information, does not include a defect such as data loss.

Then, the control portion 60 causes the display portion 50 to perform a predetermined display (step S10). Specifically, the control portion 60 causes the display portion 50 to display information indicating that there is no abnormality in the demodulated notification information, together with the demodulated notification information of the frame from the tag 90. Furthermore, the control portion 60 causes the display portion 50 to display information indicating that a reception error exists in the data communication with the tag 90 and that the communication with the tag 90 is in an unstable state. Accordingly, a user of the communication device 10 may immediately recognize whether a reception error has occurred, even in a situation in which the communication device 10 is able to output the notification information.

Next, in step S11, in the case of the control portion 60 terminating the data communication (communication) with the tag 90, the control portion 60 outputs the demodulated notification information from the tag 90, together with information indicating a result of the inspection relating to the demodulated notification information, to the upper-level machine 100. That is, the control portion 60 notifies the upper-level machine 100 that the inspection relating to the notification information is being performed due to the occurrence of the reception error. Accordingly, the upper-level machine 100 may know that the communication is in an unstable state.

### <Operation and Effect>

As described above, in the communication device 10 of the present embodiment, in the case of a result of the determination indicating that there is a reception error being obtained, the control portion 60 performs an inspection as to whether there is an error in the notification information included in the frame, using the first additional information included in the frame for which the determination has been made. In addition, in the case of the control portion 60 obtaining a result of the inspection indicating that there is no error in the notification information, the control portion 60 outputs the notification information. Accordingly, a communication device 10 that may output the notification information depending on circumstances even in the case of a reception error occurring in the communication with the tag 90 may be realized.

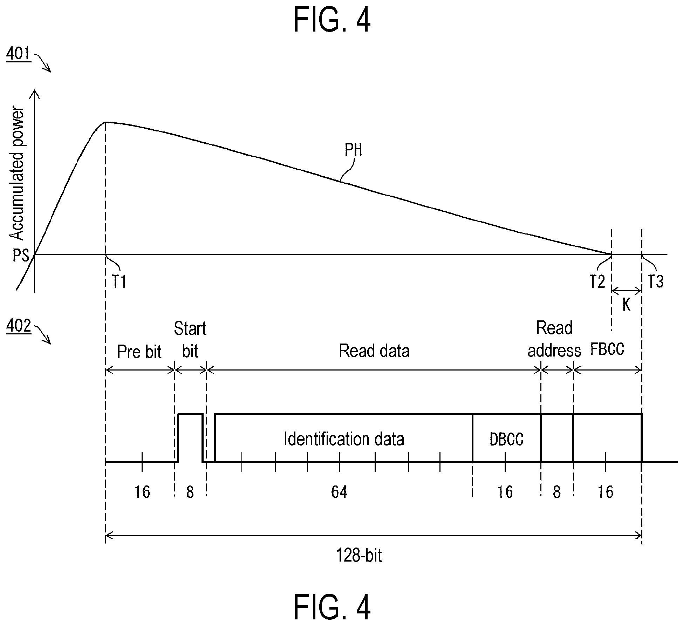

Here, the effect of the present embodiment will be specifically described also using FIG. 4. FIG. 4 is a diagram showing an operation example of the data communication of the communication device 10 and the tag 90, and is a diagram for describing the effect of the communication device 10. It is noted that 402 in FIG. 4 shows the data content after demodulation of the signal in frame unit transmitted from the tag 90 to the communication device 10.

In the communication device 10 of the present embodiment, first, a predetermined carrier wave is sent from the transmission portion 30 through the antenna 80 to the tag 90, whereby power is accumulated in the power source portion 92 of the tag 90. Then, as shown by the curve PH of 401 in FIG. 4, in the case of the accumulated power of the power source portion 92 exceeding the operable power PS, the tag 90 starts up, and after becoming capable of receiving a command from the communication device 10, the tag communication portion 91 receives the command.

Thereafter, at time point T1 of 401 in FIG. 4, the tag 90 terminates the reception of the command from the communication device 10, and the tag 90 starts transmission of a modulated signal in frame unit including notification information in response to the command to the communication device 10 through the tag communication portion 91. Then, in the tag 90, as the signal shown in 402 of FIG. 4 is sequentially transmitted from the left side toward the right side, the accumulated power of the power source portion 92 decreases.

Then, in the tag 90, for example, at time point T2, in the case of the accumulated power of the power source portion 92 falling below the operable power PS, the tag 90 enters an inoperable state. For this reason, in the tag 90, the operation is terminated without transmitting to the communication device 10 the data up to the end of the frame to be transmitted to the communication device 10 (that is, the entire data of the 128-bit frame) during the period K from time point T2 to time point T3. However, in the communication device 10, the reception portion 40 receives the signal from the tag 90 during the period from time point T1 to time point T2 and demodulates the signal into data.

As a result, as shown in 401 and 402 of FIG. 4, in the communication device 10, only approximately 8 bits of the frame block check character transmitted from the tag 90 out of the 16-bit frame block check character may be obtained from the tag 90. In other words, in the communication device 10, the reception portion 40 may not accurately demodulate the frame block check character out of the signal from the tag 90. For this reason, the determination portion 70 determines, as a result of error determination using the frame block check character, that there is an error in the demodulated frame and that it is a reception error.

On the other hand, as shown in 401 and 402 of FIG. 4, in the communication device 10, as described above, the reception portion 40 receives a part of the signal from the tag 90 between time point T1 and time point T2 and demodulates the part of the signal. Thereby, in the reception portion 40, out of the response of the tag 90, the data from the pre bit to the read address may be correctly decoded. For this reason, in the communication device 10, the control portion 60 may perform inspection of whether there is an error in the notification information using the data block check character included in the read data.

As described above, in the communication device 10 of the present embodiment, the control portion 60 determines whether to output the notification information using the data block check character out of the frame block check character and the data block check character included in the response to the command. In other words, in the case of obtaining that no defect such as data loss has occurred in the data block check character used for error detection of the notification information, the control portion 60 performs inspection of the notification information by error detection using the data block check character. Furthermore, in the case of obtaining an inspection result that there is no error in the notification information, the control portion 60 outputs the notification information.

In the communication device 10, for example, sufficient accumulated power may not be supplied to the power source portion 92 of the tag 90 due to a large separation distance from the tag 90 or a poor communication environment such as high noise. In this case, as illustrated in FIG. 4, a reception error occurs in the communication with the tag 90. Even in the case of such a reception error occurring, the communication device 10 of the present embodiment may output the notification information obtained from the tag 90 toward the upper-level machine 100, as shown in step S7, step S10, and step S11 of FIG. 3.

Specifically, the communication device (master unit) of the comparative example terminated the data communication with the tag only in the case of no defect such as data loss in both of the above two check characters included in the response, assuming that the entire frame from the tag (slave device) is correctly received. Then, the communication device of the comparative example output the information obtained from the slave device to the upper-level machine or the like. For this reason, the communication device of the comparative example needed to retry the data communication with the tag unless the entire frame is correctly received.

In contrast, in the communication device 10 of the present embodiment, in the case of obtaining that there is no error in the notification information from the tag 90, the control portion 60 may output the notification information toward the upper-level machine 100. As a result, unlike the conventional example as described above, the communication device 10 may output the notification information obtained from the tag 90 to the upper-level machine 100 without retrying the communication with the tag 90. As a result, in the upper-level machine 100, the user may quickly obtain the desired notification information. Furthermore, in the communication device 10 of the present embodiment, the occurrence frequency of retrying the communication with the tag 90 may be easily reduced, and the time required for the communication may also be easily reduced.

Furthermore, in the communication device 10 of the present embodiment, as shown in step S9 and step S11, in the case of obtaining a determination result that there is a reception error, the control portion 60 outputs information indicating a result of the inspection regarding the demodulated notification information together with the demodulated notification information about the frame. In this manner, in the present embodiment, since the communication device 10 outputs the information indicating the result of the inspection to the upper-level machine 100, the user of the upper-level machine 100 may immediately determine whether there is an error in the notification information from the communication device 10.

In other words, in the present embodiment, the upper-level machine 100 or the like of the communication device 10 may obtain information regarding the reliability of the notification information output by the communication device 10. Alternatively, the upper-level machine 100 or the like may obtain information regarding a state of the communication with the tag 90 by the communication device 10 by using the information.

Furthermore, in the communication device 10 of the present embodiment, as shown in step S9, in the case of outputting the information indicating the result of the inspection regarding the demodulated notification information, the control portion 60 may add predetermined first additional information to the information. Specifically, the control portion 60 may add a first flag or a first communication code indicating that there is a defect such as data loss in both of the frame block check character and the data block check character to the information, and output the information to the upper-level machine 100.

Further, in the communication device 10 of the present embodiment, as shown in step S11, in the case of outputting the information indicating the result of the inspection regarding the demodulated notification information, the control portion 60 may add predetermined second additional information to the information. Specifically, the control portion 60 may add a second flag or a second communication code indicating that there is a defect such as data loss in the frame block check character, that is, indicating that there is a reception error with the tag 90, to the information, and output the information to the upper-level machine 100.

Further, in the communication device 10 of the present embodiment, in the case of adding the first additional information or the second additional information to the information to the upper-level machine 100, a unique identifier of the tag 90 may be further added to the information. In this case, the unique identifier of the tag 90 and the communication state between the tag 90 and the communication device 10 are associated with each other, and the upper-level machine 100 may determine a progress status of deterioration of the tag 90.

Further, in the communication device 10 of the present embodiment, it is possible to transmit to the upper-level machine 100 that there is a reception error between the communication device 10 and the tag 90. Thus, the communication device 10 may also transmit to the upper-level machine 100 regarding the communication environment between the communication device 10 and the tag 90, and a user may determine the communication environment. Specifically, the user may determine that the separation distance between the communication device 10 and the tag 90 is too far and is not an appropriate distance, or that noise is mixed in. Furthermore, the user may promptly take countermeasures according to the determination, and it becomes possible to easily improve the communication status of the data communication between the communication device 10 and the tag 90.

Specifically, in the communication device 10 of the present embodiment, in the case of determining that there is a reception error with the tag 90, the control portion 60 increases a length of a communication time from the transmission portion 30 to the tag 90 through the antenna 80 so that a power supply time to the tag 90 becomes longer, for example, in response to an instruction from the upper-level machine 100. As a result, in the tag 90, the accumulated power of the power source portion 92 becomes larger, and stable communication with the communication device 10 becomes possible.

Further, in the communication device 10 of the present embodiment, as shown in step S4, the determination portion 70 performs the determination by error detection using the frame block check character included in the demodulated second additional information. As a result, in the present embodiment, the communication device 10 may perform the determination of whether there is a reception error regarding the frame.

Further, in the communication device 10 of the present embodiment, as shown in step S7, the control portion 60 performs the inspection by error detection using the data block check character included in the demodulated first additional information. As a result, in the present embodiment, the communication device 10 may perform the inspection of whether there is an error in the demodulated notification information.

### [Summary]

A communication device according to aspect 1 of the disclosure includes a reception portion, configured to receive a signal transmitted by a slave device in frame unit and demodulate data included in the signal; a determination portion, configured to perform determination of whether there is a reception error in the data of the frame that has been demodulated; and a control portion, in which the frame includes at least notification information, first additional information following the notification information, and second additional information following the first additional information, and the control portion, in response to obtaining a result of the determination that the reception error has occurred, performs, using the first additional information that has been demodulated, inspection of whether an error has occurred in the notification information that has been demodulated, and in response to a result of the inspection indicating that no error is present, outputs the notification information that has been demodulated.

In a communication device according to aspect 2 of the disclosure, in the aspect 1, the control portion, in response to a result of the determination that the reception error has occurred, outputs information indicating a result of the inspection.

A communication device according to aspect 3 of the disclosure, in the aspect 1 or aspect 2, further includes a display portion, and the control portion, in response to obtaining a result of the determination that the reception error has occurred and obtaining a result of the inspection that no error has occurred in the notification information that has been demodulated, causes the display portion to perform a predetermined display.

In a communication device according to aspect 4 of the disclosure, in any one of the aspect 1 to aspect 3, the determination portion performs the determination by error detection using a second check character included in the second additional information that has been demodulated.

Further, in a communication device according to aspect 5 of the disclosure, in any one of the aspect 1 to aspect 4, the control portion performs the inspection by error detection using a first check character included in the first additional information that has been demodulated.

A communication device according to aspect 6 of the disclosure, in any one of the aspect 1 to aspect 5, further includes a communication portion, and the control portion controls the communication portion to transmit the notification information to be output to an external machine.

A communication device according to aspect 7 of the disclosure, in any one of the aspect 1 to aspect 6, further includes a transmission portion configured to wirelessly transmit a command to a slave device, and the signal is a wireless response from the slave device to the command.

A communication device according to aspect 8 of the disclosure, in the aspect 7, is an RFID reader.

### [Example of Implementation by Software]

Functions of the communication device (hereinafter referred to as "device") may be implemented by a program for causing a computer to function as the device, the program causing the computer to function as each control block of the device (particularly each portion included in the control portion 60).

In this case, the device includes a computer having at least one control device (for example, a processor) and at least one storage device (for example, a memory) as hardware for executing the program. By executing the program by the control device and the storage device, each function described in each of the embodiments is implemented.

The program may be recorded on one or multiple computer-readable recording media in a non-transitory manner. The recording medium may or may not be included in the device. In the latter case, the program may be supplied to the device via any wired or wireless transmission medium.

Further, a part or all of the functions of each of the control blocks may be implemented by a logic circuit. For example, an integrated circuit in which a logic circuit functioning as each of the control blocks is formed is also included in the scope of the present invention. In addition to this, for example, the functions of each of the control blocks may also be implemented by a quantum computer.

Further, each process described in each of the embodiments may be executed by AI (Artificial Intelligence). In this case, the AI may operate on the control device, or may operate on another device (for example, an edge computer or a cloud server).

The disclosure is not limited to the embodiments described above, and various modifications are possible within the scope indicated in the claims, and embodiments obtained by appropriately combining technical means respectively disclosed in the embodiments are also included in the technical scope of the disclosure.

### Reference Signs List

10 Communication device
20 Network communication portion (communication portion)
30 Transmission portion
40 Reception portion
50 Display portion
60 Control portion
70 Determination portion
90 Tag (slave device)
100 Upper-level machine (external machine)

## Claims

1. A communication device, comprising:
a reception portion, configured to receive a signal transmitted by a slave device in frame unit and demodulate data included in the signal;
a determination portion, configured to perform determination of whether there is a reception error in the data of the frame that has been demodulated; and
a control portion,
wherein the frame comprises at least notification information, first additional information following the notification information, and second additional information following the first additional information,
wherein the control portion,
in response to obtaining a result of the determination that the reception error has occurred,
performs, using the first additional information that has been demodulated, inspection of whether an error has occurred in the notification information that has been demodulated, and
in response to a result of the inspection indicating that no error is present, outputs the notification information that has been demodulated.

2. The communication device according to claim 1, wherein the control portion, in response to a result of the determination that the reception error has occurred, outputs information indicating a result of the inspection.

3. The communication device according to claim 1, further comprising a display portion,
wherein the control portion,
in response to obtaining a result of the determination that the reception error has occurred and obtaining a result of the inspection that no error has occurred in the notification information that has been demodulated,
causes the display portion to perform a predetermined display.

4. The communication device according to claim 1, wherein the determination portion performs the determination by error detection using a second check character included in the second additional information that has been demodulated.

5. The communication device according to any one of claims 1 to 4, wherein the control portion performs the inspection by error detection using a first check character included in the first additional information that has been demodulated.

6. The communication device according to claim 1, further comprising a communication portion,
wherein the control portion controls the communication portion to transmit the notification information to be output to an external machine.

7. The communication device according to claim 1, further comprising a transmission portion configured to wirelessly transmit a command to a slave device,
wherein the signal is a wireless response from the slave device to the command.

8. The communication device according to claim 7, which is an RFID reader.
